# EUROPEAN PATENT APPLICATION

(11) **EP 1 060 797 A2**
(43) Date of publication of application: **20.12.2000**
(21) Application number: 00305065.5
(22) Date of filing: 15.06.2000
(51) Int. Cl.: B05C 5/02, B05C 11/10

(54) **Adhesive coating apparatus**

(30) Priority: 18.06.1999 JP 17334899
(71) Applicant: SONY CORPORATION, Tokyo (JP)
(72) Inventor: Kano, Kenichi, Shinagawa-ku, Tokyo (JP)
(74) Representative: Boden, Keith McMurray

(57) **Abstract**

An adhesive coating apparatus for applying molten adhesive 13 on a hub 8 to be mounted on the rim of a center opening 7 bored in a main disc member 6. The adhesive coating apparatus includes a hub holding mechanism 61 for holding the hub 8, and an adhesive emitting mechanism 62 including an emitting portion 74 for emitting molten adhesive 13 to be applied to the flange 10 of the hub 8. The adhesive emitting mechanism 62 transfers molten adhesive 13 emitted by the emitting portion 74 to a surface of the flange 10 of the hub 8 facing the main disc member 6. The adhesive coating apparatus also includes an adhesive supplying mechanism 91 including an adhesive reservoir 92 for storing molten adhesive 13 and an electro-magnetic valve 94 for controlling the supply of molten adhesive 13 to the adhesive emitting mechanism 62 from the adhesive reservoir 92. The electro-magnetic valve 94 is intermittently opened/closed by specified pulse signals in a controlled manner to supply the molten adhesive 13 to the emitting portion 74.

## Description

This invention relates to an adhesive coating apparatus for applying an adhesive on a hub when mounting the hub on a main disc portion constituting a disc-shaped recording medium such as a magnetic disc.

Among disc cartridges rotationally housing magnetic discs in main cartridge body units, there is such a one employing a magnetic disc, 3.5 inch in diameter, carrying a magnetic layer on a flexible disc substrate. This magnetic disc has a main disc member having a flexible disc substrate of a synthetic resin material on both surfaces of which are deposited magnetic layers. At a center portion of the main disc member is bored a substantially circular center opening and a hub is mounted for closing the center opening. This hub is made up of a bottomed tubular main body portion and a flange extending outwards from an opening end of the main body portion. This hub is mounted on the rim of the center opening of the main disc member by applying a molten adhesive to a surface of the hub flange facing the rim of the center opening of the main disc member, by introducing the main body portion into the center opening of the main disc member and pressuring the flange against the rim of the center opening of the main disc member.

An adhesive applying device for coating the molten adhesive to the hub flange is made up of a hub holding unit for holding the hub transferred from a hub supplying mechanism, an adhesive emitting unit for coating a molten adhesive to a flange of the hub held by this hub holding unit, and an adhesive supplying unit for supplying the molten adhesive to this adhesive emitting unit. When the hub to be mounted on the main disc member is transferred from the hub supplying mechanism to the hub holding unit, and is held thereby, the manufacturing device for the disc-shaped recording medium is turned on for 0.1 to 0.5 sec to supply a predetermined amount of the molten adhesive from the adhesive supply unit to the adhesive emitting unit. This causes a predetermined amount of the molten adhesive to be emitted at a time from the adhesive emitting unit and transferred to the flange of the hub held by the hub holding unit. The hub coated with the molten adhesive then is bonded to the rim of the center opening of the main disc member by a transfer head mechanism to the rim of the center opening of the main disc member.

When the molten adhesive is supplied to the adhesive emitting unit, there is produced a variation in the amount of the adhesive emitted by the emitting portion due to variations in the emitting pressure of the molten resin. The result is that the hub mounting position tends to be deviated when mounting the hub on the rim of the center opening of the main disc member. If the magnetic disc, thus deviated in its hub mounting position, is loaded on the recording and/or reproducing apparatus and run in rotation, the magnetic disc tends to be offset, while the disc surface undergoes significant deviation from planarity, with the result that information signals cannot be recorded and/or reproduced reliably.

On the other hand, the molten resin is stored in the interior of the adhesive supply unit adapted to supply a molten resin to the adhesive emitting unit. The molten resin tends to be oxidized due to contact of its liquid surface with air. In this case, the molten resin is gelated to produce variations in the amount of the molten resin emitted to the adhesive emitting portion, thus lowering the adhesive power. The result is that the hub tends to be peeled from the rim of the center opening of the main disc member on completion of fabrication of the magnetic disc. When run in rotation, the magnetic disc cannot be centered, and moreover the disc surface undergoes deviation from planarity to render it impossible to record information signals reliably.

Among the magnetic discs of this type, there is such a magnetic disc the recording capacity of which is tens to hundreds of megabytes (MBs) in comparison with the routine recording capacity of 2 MBs. This magnetic disc is rotated at a higher speed during recording and/or reproduction than a conventional magnetic disc, so that deviation in the hub mounting position affects the recording and/or reproducing operation significantly. For this reason, the prescribed allowance for the amount of deviation from surface planarity in a direction along the rotary axis on the inner rim side of the conventional magnetic disc is set to 270 µm/360 rpm, whereas that of the high-density magnetic disc is set to 50 µm/3600 rpm. That is, with the present magnetic disc, the amount of deviation from surface planarity needs to be smaller appreciably than with the conventional magnetic disc. Therefore, in the high recording density magnetic disc, the hub needs to be mounted reliably at a correct mounting position.

It is therefore an aim of the present invention to provide an adhesive coating apparatus whereby a hub can be mounted reliably on the rim of the center opening of the main body portion of the recording medium.

It is another aim of the present invention to provide an adhesive coating apparatus whereby it is possible to prevent oxidation of the molten adhesive stored in the adhesive supplying unit.

The present invention provides an adhesive coating apparatus including a hub holding mechanism for holding a hub provided with a bottomed substantially tubular main body portion, fitted in a center opening bored in a center portion of a disc-shaped main body portion of a recording medium, and with a flange extended from an opening end of the main body portion so as to be bonded to the rim of the center opening of the main body portion of the recording medium, and an adhesive emitting mechanism including an emitting portion for emitting an adhesive to be applied to the flange of the hub held by the hub holding mechanism. The adhesive emitting mechanism transfers the adhesive emitted by the emitting portion to a surface of the flange of the hub held by the hub holding mechanism facing the main body portion of the recording medium. The adhesive coating apparatus also includes an adhesive supplying mechanism provided with an adhesive reservoir for storing the molten adhesive and with a control valve for controlling the supply to the emitting portion from the adhesive reservoir. The adhesive supplying mechanism supplies the molten adhesive to the emitting portion. The control valve is intermittently opened/closed in a controlled manner by pulse signals to supply the molten adhesive. This assures that a constant amount of the molten adhesive is emitted and that a uniform height and width of the molten adhesive is discharged to the emitting portion. Preferably, the control valve is opened/closed by pulse signals having a pulse width of 0.01 msec to 0.5 msec.

The adhesive reservoir is preferably fed with an inert gas effective to prevent oxidation of the molten adhesive stored therein to prevent gelation of the molten adhesive. The inert gas preferably has a specific gravity heavier than that of oxygen to permit the inert gas to follow the liquid level of the molten adhesive stored in the adhesive reservoir.

In the adhesive coating apparatus according to the present invention, the control valve is opened/closed in a controlled manner by pulse signals to supply a minor quantity of the molten adhesive intermittently until the amount of the molten adhesive is sufficient to be transferred to the flange of the hub. This permits transfer of a specified amount of the molten adhesive to the hub flange, whereby the hub can be reliably mounted on the rim of the center opening of the main body portion of the recording medium without offset in its mounting position. Thus, with the disc-shaped recording medium, comprising the main body portion of the recording medium and the hub mounted thereon, it is possible to reduce the amount of offset or deviation from true planarity to effect reliable recording and/or reproduction of information signals.

Preferred embodiments of the present invention will now be described hereinbelow by way of example only with reference to the accompanying drawings, in which:
Fig. 1 is a schematic view showing a manufacturing device for a magnetic disc according to the present invention.
Fig.2 is an overall perspective view showing a disc cartridge.
Fig.3 is a cross-sectional view showing portions of a magnetic disc.
Fig.4 is a cross-sectional view of a holding mechanism of a main disc member.
Fig.5 is a cross-sectional view showing portions of an adhesive coating mechanism.
Fig.6 is a cross-sectional view showing portions of an emitting nozzle unit.
Fig.7 is a plan view showing the emitting nozzle unit adapted for emitting an adhesive.
Fig.8 is a schematic view showing an adhesive supplying unit.
Fig.9 illustrates a control signal for controlling an electro-magnetic valve.
Fig.10 is a perspective view of a hub fed with the molten adhesive.
Fig.11 is a cross-sectional view showing portions of the emitting portion.
Fig.12 is a schematic cross-sectional view showing the state in which a transfer head mechanism provisionally affixes a hub held by a holding mechanism on the main disc member.
Fig.13 is a schematic cross-sectional view showing the state in which a thrusting mechanism performs secondary thrusting of the hub against the main disc member.
Fig.14 illustrates an engagement opening engaged by an engagement projection.
Fig.15 is a schematic cross-sectional view showing the state in which a thrusting mechanism performs tertiary thrusting of the hub against the main disc member.
Fig.16 is a flowchart for illustrating the manufacturing process for the magnetic disc.

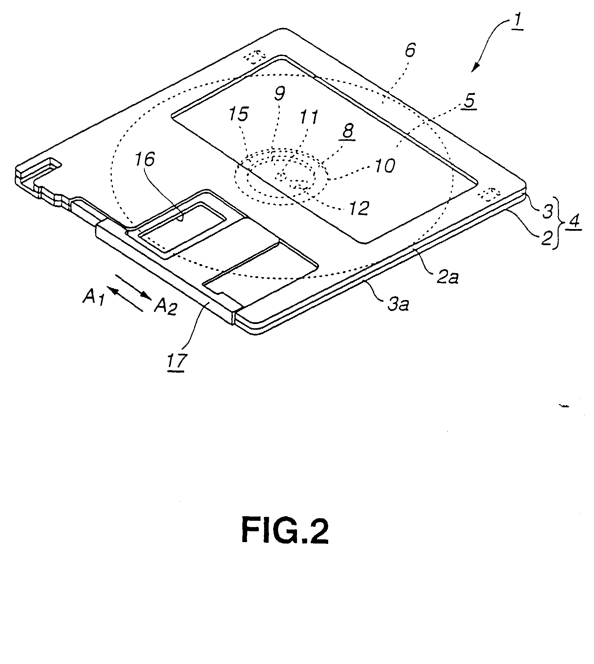

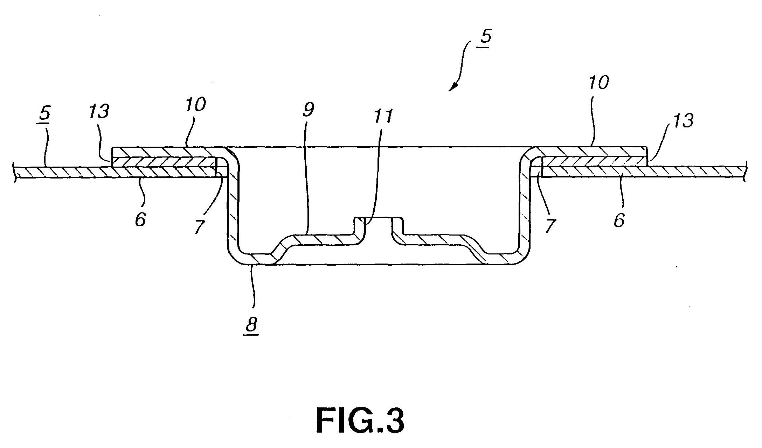

Referring to the drawings, a manufacturing device for a magnetic disc according to the present invention will be explained in detail. This magnetic disc manufacturing device applies an adhesive to a hub when mounting the hub in a center opening bored in the center portion of a main disc member constituting a flexible magnetic disc used as a recording medium of a disc cartridge. Before proceeding to description of the magnetic disc manufacturing device, the disc cartridge employing the magnetic disc as a recording medium is explained by referring to Figs.2 and 3.

Referring to Fig.2, the disc cartridge 1 includes a main cartridge body unit 4, obtained on injection molding a synthetic resin material to a subsequently rectangular profile and a magnetic disc 5 housed in the main cartridge body unit 4 for recording information signals.

Referring to Fig.3, this magnetic disc 5 includes a main disc member 6, with a diameter of 3.5 inch, comprising a thin flexible film-shaped disc substrate, on both surfaces of which are deposited magnetic layers. This main disc member 6 has a center opening 7, which is closed by a hub 8 mounted therein. The hub 8 is formed of a magnetic material, such as metal, and is magnetically attracted by a magnet arranged on the disc rotating driving unit. The hub 8 is formed of a magnetic material, such as metal, such that, when the magnetic disc 5 is loaded on a disc rotating driving unit arranged on the disc recording and/or reproducing apparatus, the hub 8 is magnetically attracted by a magnet provided on the disc rotating driving unit. The hub 8 has a bottomed cylindrical main body portion 9, having a planar bottom, and also has a flange 10, operating as a mounting portion to the main disc member 6, and which is integrally protruded therefrom at an upper opening end of the main body portion 9. In the bottom surface 9a of the main body portion 9 are bored a spindle shaft engagement opening 11, engaged by a spindle shaft of the disc rotating driving unit, at an offset position from the center portion.

The hub 8 described above is attached to the main disc member 6 with a thermoplastic adhesive 13 applied to the surface portion of the flange 10 facing the center opening 7 of the main disc member 6, with the main body portion 6 being fitted in the center opening 7 of the main disc member 6. This magnetic disc 5 has a storage capacity of 100 MB or more and is loaded on the disc rotating driving unit for rotation at an rpm not less than 3000. The mounting step on the main disc member 6 of the hub 8 is carried out by a manufacturing device 20 for the magnetic disc 5 which will be explained subsequently.

The main cartridge body unit 4, housing the magnetic disc 5, described above, is formed by abutting and interconnecting the upper and lower cartridge halves 2, 3 obtained on injection molding to a subsequently rectangular profile. The inner surfaces of the upper and lower cartridge halves 2, 3 are formed integrally with substantially arcuate partitioning wall sections for inscribing upstanding peripheral wall sections 2a, 3a provided on the outer rims of the upper and lower cartridge halves 2, 3. These partitioning wall sections delimit a disc housing section rotatably housing the magnetic disc 5.

At a center portion of the lower cartridge half 3 constituting the lower surface of the main cartridge body unit 4 is formed a circular center opening 15 through which the hub 8 mounted on the magnetic disc 5 housed in the main cartridge body unit 4 is exposed to outside. In the opposing positions of the upper and lower cartridge halves 2, 3 of the main cartridge body unit 4 are formed recording and/or reproducing apertures 16, 16 configured for exposing at least a portion of the signal recording area of the magnetic disc 5 housed in the main cartridge body unit 4 to outside along the radius of the magnetic disc 5. These recording and/or reproducing apertures 16, 16 are bored at a mid portion in a left-and-right direction of the main cartridge body unit 4 substantially in a rectangular profile for extending from the vicinity of the center opening 15 to the vicinity of the front wall section of the main cartridge body unit 4.

On the main cartridge body unit 4 is movably mounted a shutter member 17 adapted for opening/closing the recording and/or reproducing apertures 16, 16. The shutter member 17 is formed by punching and bending a thin metal plate to a substantially U-shape. The shutter member 17 is biased by a torsion coil spring, not shown, in the direction indicated by arrow A₁ in Fig.2 and is thereby moved between a position closing the recording and/or reproducing apertures 16, 16 and a position opening the apertures 16, 16. The shutter member 17 is moved in the direction indicated by arrow A2 in Fig.2 only when the shutter member 17 is loaded on the disc recording and/or reproducing apparatus to open the recording and/or reproducing apertures 16, 16.

When the disc cartridge 1, described above, is loaded on the disc recording and/or reproducing apparatus, the shutter member 17 is moved by a shutter opening mechanism provided on the disc recording and/or reproducing apparatus, in the direction indicated by arrow A2 in Fig.2, for opening the recording and/or reproducing apertures 16, 16. The hub 8 exposed through the center opening 15 bored in the lower surface of the main cartridge body unit 4 of the disc cartridge 1 is set on a disc table constituting the disc rotating driving unit of the disc recording and/or reproducing apparatus, whilst a spindle shaft of the disc rotating driving unit is engaged in the spindle shaft engagement opening 11. At this time, the hub 8 is set on the disc table constituting the disc rotating driving unit and is attracted by the magnet provided on the disc table for rotation as one with the disc table. When the spindle motor constituting the disc rotating driving unit is driven rotationally in this state to run the disc table in rotation, the driving pin of the disc rotating driving unit is engaged in a driving pin engagement opening 12 so that the magnetic disc 5 is positioned relative to the spindle shaft and is run in rotation in synchronism with rotation of the disc table about the spindle shaft as the center of rotation. The magnetic head is intruded into the main cartridge body unit 4 through the recording and/or reproducing apertures 16, 16 for recording and/or reproducing information signals on or from the magnetic disc 5.

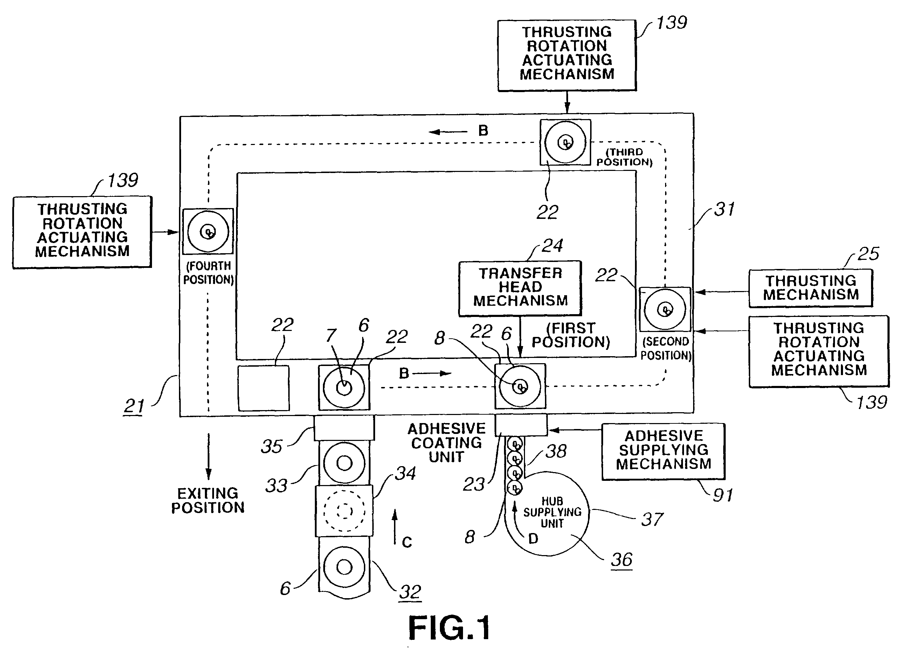

Referring to Fig.1, the manufacturing device 20 for the magnetic disc 5 configured for mounting the hub 8 of the magnetic disc 5 used for the above disc cartridge 1 on the main disc member 6 includes a transporting unit 21 for transporting the main disc member 6, a disc holding unit 22 for holding the main disc member 6 transported by the transporting unit 21, and an adhesive coating unit 23 for applying a molten adhesive 13 to the hub 8 mounted on the main disc member 8 held by the disc holding unit 22. The manufacturing device 20 also includes a transfer head mechanism 24 for transferring the hub 8 coated with the molten adhesive 13 by the adhesive coating unit 23 to the main disc member 6 for provisionally bonding the hub 8 to the main disc member 6 and a thrusting unit 25 for thrusting the hub 8 against the main disc member for completely bonding the hub 8 provisionally bonded by the transfer head mechanism 24.

The transporting unit 21, adapted for transporting the main disc member 6, having mounted thereon the main disc member 6 and the hub 8, has its transporting channel constituted by a loop-like conveyor 31, and is run in the direction indicated by arrow B in Fig. 1. On this conveyor 31 are mounted a plurality of the disc holding units 22 adapted for holding the main disc members 6. The conveyor 31 is run at a speed such that the molten adhesive 13 is completely cured in one complete cycle from a position of entrance of the main disc member 6 to a position of exit at which the main disc member 6 fitted with the hub 8 is taken out as the magnetic disc 5. That is, the transporting unit 21 causes the main disc member 5 carrying the hub 8 to exit at a time point the molten adhesive 13 is completely cured to prevent a situation in which the molten adhesive 13 is cured only after exiting of the main disc member to produce distortion in the main disc member 6.

At the entrance position, the disc supplying unit 32 for supplying the main disc member 6 to the transporting unit 21 includes a conveyor 33 for supplying the main disc member 6 to the conveyor 31 of the transporting unit 21, as shown in Fig. 1. Since the main disc member 6 is directly set on the conveyor 33, the latter is formed of a soft felt-like material so as not to contaminate the main disc member 6. The conveyor 33 is run in the direction indicated by arrow C in Fig. 1 to supply the main disc member 6 set on the conveyor 33 to the transporting unit 21. The conveyor 33 is coated by a static charge removing unit 34 adapted to remove static charges produced on the main disc member 6. The static charge removing unit 34 includes an air gun for ejecting ionized air to the main disc member 6 transported by the conveyor 33 to remove static charges produced on the main disc member 6. The main disc member 6, freed of the static charges, is transferred to the disc holding unit 22 arranged on the transporting unit 21 by a transfer unit 35 adapted for transferring the main disc member 6 to the transporting unit 21.

The transporting unit 21 is provided with a hub supplying mechanism 36 downstream of an entrance position of the main disc member 6. The hub supplying mechanism 36 includes a housing unit 37 housing a large number of hubs 8 and a transporting unit 38 for sequentially sliding the hubs accommodated in the housing unit 37 to supply the hubs to the transporting unit 21. The transporting unit 38 transports the hubs from the housing unit 37 in the direction indicated by arrow D in Fig. 1 which is a direction towards the transporting unit 21. The hub supplying mechanism 36 is configured for causing the hubs to dwell in a standby state at the trailing end of the transporting unit 38 with the flange 10 of the hub 8 directing upwards. The molten adhesive 13 is applied to each hub by the adhesive coating unit 23 adapted for applying the molten adhesive 13 to the flange 10 of the hub 8, in a manner not shown in detail, and is transferred by the transfer head mechanism 24 to the main disc member 6 transported by the transporting unit 21.

The disc holding unit 22 for holding the main disc member 6 arranged in the transporting unit 21 includes a holding member 41 for holding the main disc member 6 and a positioning member 42 for positioning the main disc member 6 held by the holding member 41.

The holding member 41 includes a substrate 43 mounted on the conveyor 31 constituting the transporting unit 21. A center opening 44 is bored in a center portion of the substrate 43. Around the center opening 44 is formed a substantially cylindrically-shaped upstanding portion 45. At an opening end of the upstanding portion 45 is formed a disc supporting portion 46a supporting a non-recording area formed at a rim of the center opening 7 of the main disc member 6, that is in an area radially inwardly of the signal recording area of the main disc member 6. On an outer rim side of the disc supporting portion 46a is formed a disc supporting portion 46b configured for supporting the non-recording area on the outer rim side of the main disc member 6, that is on the outer side of the signal recording area of the main disc member 6. The disc supporting portions 46a, 46b are formed as rings slightly larger than the outer diameter of the main disc member 6 and are designed to support the inner and outer rims of the main disc member 6. On the setting surfaces of the disc supporting portions 46a, 46b, configured for setting the main disc member 6 thereon, there is arranged a protective sheet formed of a soft material, such as a felt, for preventing contamination of the main disc member 6, although such protective sheet is not shown for clarity. The diameter of the center opening 44 is selected to be equal to the diameter of the center opening 7 bored in the main disc member 6.

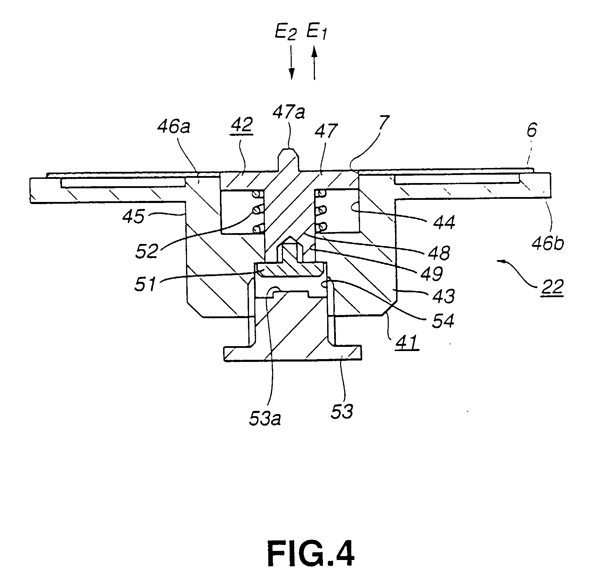

In the center opening 44 of the substrate 43, there is arranged a positioning member 42 for movement in a direction towards and away from the main disc member 6 set on the disc supporting portions 46a, 46b, as indicated by arrow E1 or E2 in Fig.4. On the upper end of the positioning member 42 is formed a fitting portion 47 fitted in the center opening 7 of the main disc member 6. The fitting portion 47 is substantially disc-shaped and is of substantially the same diameter as the center opening 7 of the main disc member 6 and is configured for fitting in the center opening 7. On the major surface of the fitting portion 47 is protuberantly formed an engagement protrusion 47a engaged in the spindle shaft engagement opening 11 bored in the hub 8 mounted in the center opening 7 of the main disc member 6.

The positioning member 42 is provided with a shank portion 48 formed integrally with the fitting portion 47. The shank portion 48 is introduced into an insertion opening 49 bored in the bottom of the center opening 44 of the substrate 43. The insertion opening 49 communicates with a mounting hole 54 provided in a registering portion of the substrate 49. In the lower end of the shank portion 48 introduced into the insertion opening 49 is mounted a stop 51 engaged with the bottom of the mounting hole 54. Between the bottom of the center opening 44 of the positioning member 42 and the fitting portion 47 is interposed a compression coil spring 52 which is a biasing member configured for biasing the positioning member 42 in a direction towards the main disc member 6 as indicated by arrow E1 in Fig.4. The compression coil spring 52 biases the positioning member 42 in the direction indicated by arrow E1 in Fig.4 until the stop 51 is retained by the bottom surface of the mounting hole 54. The positioning member 42 is protruded to a height such that the surface of the fitting member 47 will be flush with the surface of the main disc member 6 set on the disc supporting portions 46a, 46b which is opposite to the disc surface lying towards the disc supporting portions 46a, 46b.

The substrate 43 is provided with the mounting hole 54 on its side opposite to the center opening 44. In this mounting hole 54 is mounted an adjustment screw 53 adapted for adjusting the amount of movement of the positioning member 42. On the distal end of the adjustment screw 53 is protuberantly formed an abutment portion 53a against which abuts the stop 51 mounted on the shank portion 48 of the positioning member 42. The adjustment screw 53 adjusts the amount of intrusion into the mounting hole 54 to adjust the amount of movement of the positioning member 42 in the direction indicated by arrow E2 in Fig.4. That is, the hub 8 is mounted in the center opening 7 of the main disc member 6, such that, when the hub 8 is thrust by the transfer head mechanism 24 and the thrusting unit 25, the positioning member 42 is moved in the direction indicated by arrow E2 in Fig.4. It is noted that, by adjusting the amount of intrusion of the adjustment screw 53, it is possible to control the amount of movement of the positioning member 42 in the direction indicated by arrow E2 in Fig.4 to thereby adjust the film thickness of the molten adhesive 13 interposed between the main disc member 6 and the flange 10 of the hub 8.

For cooling the molten adhesive 13, the holding member 41 and the positioning member 42 are formed of a material having superior heat radiating properties, and is configured for efficiently curing the molten adhesive 13.

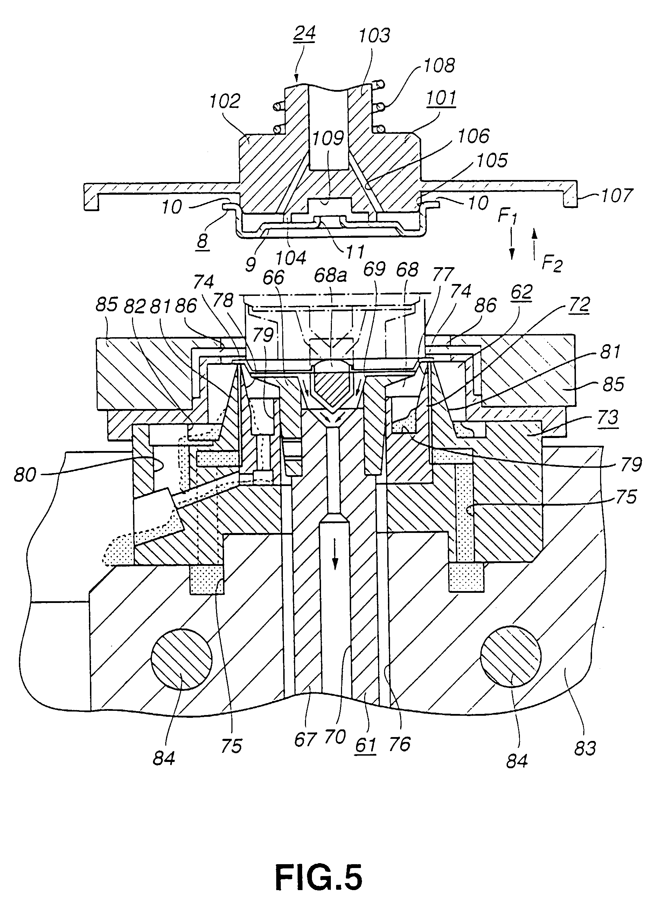

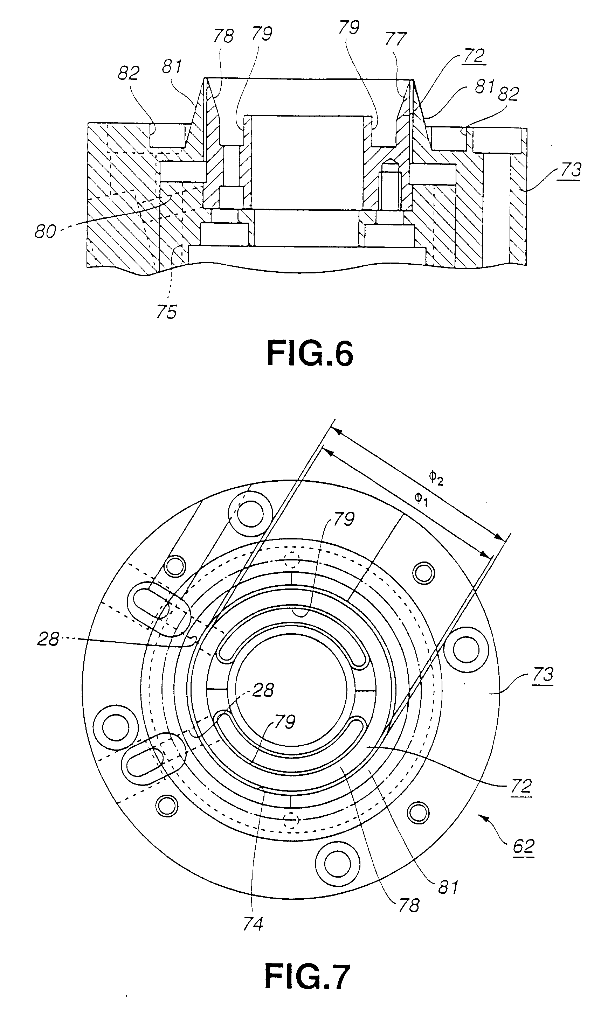

The adhesive coating unit 23 for coating the molten adhesive 13, configured for bonding the hub 8 supplied from the hub supplying mechanism 36 to the rim of the center opening 7 of the main disc member 6, on the surface of the flange 10 of the hub 8 facing the main disc member 6, includes a hub holding unit 61, adapted for holding the hub 8, on which is coated the molten adhesive 13, and an adhesive emitting unit 62, adapted for emitting the molten adhesive 13, as shown in Figs.5 and 6.

The hub holding unit 61 includes a hub holding member 66, adapted for holding the hub 8, and a rotating lifting member 67, adapted for rotating and uplifting/lowering the hub holding member 66, as shown in Fig.5. The hub holding member 66 is substantially of an inverted frusto-conical shape and is provided with a hub supporting portion 68 supporting the hub 8, as shown in Fig.5. Centrally of the hub supporting portion 68 is formed a positioning projection 68a engaged in the spindle shaft engagement opening 11 of the hub 8. An end of the rotating lifting member 67 is formed integrally with the lower end of the hub holding member 66 and is intruded in an intrusion opening 76 formed in an adhesive emitting unit 63 which will be explained subsequently. This rotating lifting member 67 is uplifted and lowered in the direction indicated by arrow F1 and F2 in Fig.5, towards and away from an adhesive emitting unit 62, as the rotating lifting member 67 is run in rotation by a driving mechanism, not shown, along with the hub holding member 66. The hub holding member 66 and the rotating lifting member 67 are provided respectively with suction openings 69, 70 communicating with each other for sucking the hub 8 held by the hub holding member 66. The openings 69, 70 are connected to a suction pump, not shown, so that, when the hub 8 is held by the hub holding member 66, the suction pump is actuated to cause the hub holding member 66 to hold the hub 66.

In the above-described hub holding unit 61, the spindle shaft engagement opening 11 of the hub 8 is engaged by the positioning projection 68a of the hub holding member 66 so that the hub 8 is positioned in and supported by the hub supporting portion 68. The hub holding member 66 holds the hub 8 by suction by the hub supporting portion 68 by the suction pump sucking air through the suction opening 69. As the rotating lifting member 67 is rotated and simultaneously uplifted/lowered, the hub holding member 66 is rotated and uplifted/lowered between a position at the center of the adhesive emitting unit 62 indicated by a solid line in Fig.5 and a position spaced apart from the adhesive emitting unit 62 indicated by a broken line in Fig.5.

The adhesive emitting unit 62 includes an inner peripheral tubular member 72, having a tapered upper end, and an outer peripheral tubular member 73, provided on the outer periphery of the inner peripheral tubular member 72 and which likewise has a tapered upper end, as shown in Figs.5 and 6. Between the tapered acute upper ends of these tubular members 72, 73 is formed a substantially annular emitting portion 74 for emitting the molten adhesive 13 of thermoplastic resin used for bonding the hub 8 to the main disc member 6. Meanwhile, the spacing between the upper ends of the inner and outer peripheral tubular members 72, 73 is set to, for example, 0.2 mm or less.

In the adhesive emitting unit 62, the outer peripheral tubular member 73 is adapted for being detached from the inner peripheral tubular member 72, as shown in Fig. 5, to permit cleaning or like operations for the emitting portion 74. Moreover, in the adhesive emitting unit 62, the spacing between the diameter ⌀1 of the upper end of the inner peripheral tubular member 72 and the diameter ⌀2 of the upper end of the outer peripheral tubular member 73 is adjusted, as shown in Fig.7, to adjust the amount of emission of the molten adhesive 13 appropriately.

This adhesive emitting unit 62 is provided with a channel 75 for supplying the molten adhesive 13 to the emitting portion 74, as shown in Fig.5. The channel 75 for supplying the molten adhesive 13 has its one end communicating with the emitting portion 74, while having its other end connected to an adhesive supplying mechanism 91, as will be explained later. In the inner rim side of the inner peripheral tubular member 72 of the adhesive emitting unit 62 is bored an intruding hole 76 into which is intruded the rotating lifting member 67 formed integrally with the hub holding member 66. The rotating lifting member 67, formed integrally with the hub holding member 66, is introduced into the intrusion opening 76 and is uplifted/lowered in the direction indicated by arrow F1 and F2 in Fig.5, that is towards and away from the adhesive emitting unit 62, as it is run in rotation. Centrally of the upper end of the adhesive emitting unit 62 is defined a housing 77 in which to accommodate the hub holding member 66. The housing 77, in which to accommodate the hub holding member 66, is of a substantially funnel-shaped cross-section to accommodate the hub holding member 66 therein.

That is, the housing 77 is progressively reduced in diameter, from its upper end, corresponding to the emitting portion 74, to its lower end, as shown in Figs.5 and 6, to define an inner peripheral inclined surface 78 which operates to permit any excess molten adhesive 13 to flow outwards when such excess molten adhesive 13 is emitted from the emitting portion 74. In continuation to the inner peripheral inclined surface 78 is formed a substantially annular inner peripheral discharging groove 79 for discharging the outflowing portion of the molten adhesive 13. The outer peripheral portion towards the emitting portion 74 of the outer peripheral tubular member 73 is progressively increased in diameter from its upper end corresponding to the emitting portion 74 towards its lower end to define an outer peripheral inclined surface 81 which operates to permit any excess molten adhesive 13 to flow outwards when such excess molten adhesive 13 is emitted from the emitting portion 74. In continuation to the outer peripheral inclined surface 81 is formed a substantially annular outer peripheral discharging groove 79 for discharging the outflowing portion of the molten adhesive 13. The inner peripheral discharging groove 79 and the outer peripheral inclined surface 81 communicating each other are connected to a discharge duct 80 for discharging the molten adhesive 13 in the inner peripheral discharging groove 79 to outside of the apparatus.

The adhesive emitting unit 62 has a base block member 83 within which is arranged an annular heater 84, as shown in Fig.5. The heater 84 is adapted to keep the temperature of the adhesive emitting unit 62 to maintain the molten state of the molten adhesive 13 emitted from the emitting portion 74.

Referring to Fig.5, the adhesive emitting unit 62 includes an air ejecting unit 85 operating for severing a sting of the molten adhesive 13 lying between the hub 8 and the emitting portion 74 when the hub 8 coated with the molten adhesive 13 is moved away from the hub holding unit 61, as shown in Fig.5. The air ejecting unit 85 includes an annular ejection port 86 on the outer rim side of the emitting portion 74 for ejecting air for severing the string of the molten adhesive 13 from the ejection port 86. This air is at a temperature of 100 to 300°C which is not enough to cure the molten adhesive 13. The air ejecting unit 85 emits air from the ejection port 86 only when the hub 8 coated with the molten adhesive 13 is moved by the hub holding unit 61 in the direction indicated by arrow F1 in Fig.5.

The adhesive supplying mechanism 91, adapted for supplying the molten adhesive 13 to the adhesive emitting unit 62, includes an adhesive reservoir 92 in which to hold the molten adhesive 13, a pump 93 for supplying the molten adhesive 13 from the adhesive reservoir 92 to the adhesive emitting unit 62, and a electro-magnetic valve 94 for controlling the supply of the molten adhesive 13 to the flow channel 75 for the adhesive coating unit 23.

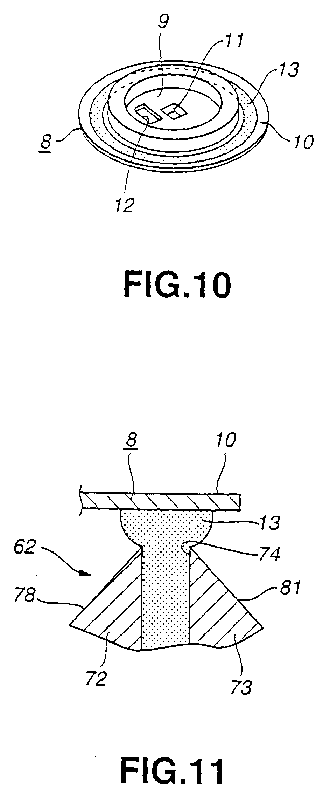

The adhesive reservoir 92 includes a heater 92a charged with the solid thermoplastic adhesive 13 to fuse the adhesive. The heater 92a heats and fuses the solid adhesive 13 so as not to cure the adhesive. The heater 92a heats and fuses the solid adhesive 13 at a temperature of 120 to 200°C. The pump 93 quantitatively routes the molten adhesive 13 stored in the adhesive reservoir 92 to the adhesive reservoir 92. The electro-magnetic valve 94 finishes the molten adhesive 13 at a predetermined duty cycle to the flow channel 75 of the adhesive emitting unit 62. Since the flow channel 75 is fed with the molten adhesive 13 at a predetermined duty cycle by the electro-magnetic valve 94, a minor quantity of the molten adhesive 13 is fed to the emitting portion 74 so that the molten adhesive 13 is routed uniformly along the circumference of the emitting portion 74, as shown in Fig.10.

The adhesive supplying mechanism 91 includes a gas tank 95, charged with an inert gas supplied to the adhesive reservoir 92, a gas supply unit 96 for supplying the inert gas of the gas tank 95 to the adhesive reservoir 92, and a controller 97 for controlling the gas supply unit 96, electro-magnetic valve 94 etc. The inert gas in the gas tank 95 prevents oxidation of the molten adhesive 13 in the adhesive reservoir 92 and is a gas higher in specific gravity than oxygen, such as argon, nitrogen or carbonic acid gas. The gas supply unit 96 periodically sends the inert gas into the inside of the adhesive reservoir 92. In the adhesive reservoir 92, the inert gas is charged in a space devoid of the molten adhesive 13. The inert gas is heavier in specific gravity than oxygen, so that, if the amount of the molten adhesive 13 in the adhesive reservoir 92, and hence the liquid surface is lowered, the molten adhesive 13 descends to follow the liquid surface. This prevents the molten adhesive 13 in the adhesive reservoir 92 from being oxidized due to contact with oxygen.

The controller 97 controls the adhesive reservoir 92, pump 93, electro-magnetic valve 94 and the gas supply unit 96. Specifically, the controller 97 controls the heater 92a to fuse the solid adhesive 13 to maintain the molten state of the adhesive 13.

The controller 97 controls the gas supply unit 96 to cause the inert gas to be sequentially supplied to the adhesive reservoir 92 when the amount of the molten adhesive 13 in the adhesive reservoir 92 is decreased to lower the liquid surface.

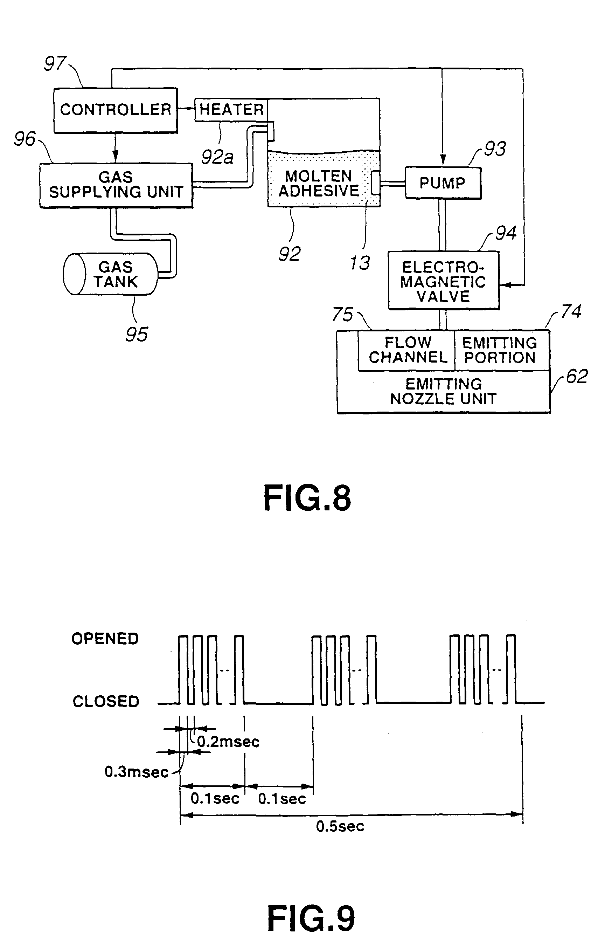

The controller 97 controls the pump 93 to cause the molten adhesive 13 to be fed quantitatively to the adhesive emitting unit 62. The controller 97 also opens and closes the electro-magnetic valve 94 to permit the molten adhesive 13 to be intermittently supplied to the flow channel 75 of the adhesive emitting unit 62. Specifically, when applying the molten adhesive 13 to the flange 10 of the flange 10 of the hub 8, the controller 94 causes the electro-magnetic valve 94 to be opened and closed by pulse signals with a pulse width of 0.01 to 0.5 msec. More preferably, when coating the molten adhesive 13 on the flange 10 of the hub 8, the controller 94 outputs pulse trains, with a period of 0.5 msec and a pulse width of 0.3 msec, thrice on end, with a pause period of 0.1 sec between neighboring pulse trains, as shown in Fig.9. That is, the electro-magnetic valve 94 is opened and closed, under control by the controller 95, so that the electro-magnetic valve 94 is repeatedly opened for 0.3 msec and closed for 0.2 msec, during 0.1 second, this opening and closing cycle being repeated thrice during 0.5 sec, with a pause period of 0.1 sec between neighboring pulse trains. When applying the molten adhesive 13 on the flange 10 of each hub 8, the controller 95 controls the electro-magnetic valve 94 to be opened and closed to supply the molten adhesive 13 to the emitting portion 74. It is noted that the electro-magnetic valve 94 is to be opened and closed at any optional interval other than set forth above for supplying the molten adhesive 13 to the emitting portion 74 to apply the molten adhesive 13 to the flange 10 of each hub 8.

In the above-described adhesive supplying mechanism 91, the adhesive reservoir 92 fuses the solid adhesive 13 by the heater 92a and hence is heated to a temperature such that the molten adhesive 13 is not solidified. In a spatial area in the adhesive reservoir 92 is charged an inert gas adapted for preventing oxidation of the molten adhesive 13. The pump 93 is supplied at all times with the molten adhesive 13 by the adhesive emitting unit 62 under control by the controller 97. When the hub 8 is fed by the adhesive emitting unit 62, the electro-magnetic valve 94 is opened/closed under control by the controller 97 so that the molten adhesive 13 is intermittently supplied to the channel 75 of the adhesive emitting unit 62. When coating the molten adhesive 13 on the flange 10 of each hub 8, the electro-magnetic valve 94 is opened/closed, under control by the controller 94, so that a sequence of pulse signals, each having a period of 0.5 msec and a pulse width of 0.3 msec, are generated, thrice on end, in an intermittent manner, with the pause period of 0.1 sec, as shown in Fig.9. This causes the molten adhesive 13 to be emitted at a specified pressure to the emitting portion 74 which is thereby fed with a specified amount oft the molten adhesive 13. This molten adhesive 13 is fed to the emitting portion 74 at an even height state and at an even width state. The molten adhesive 13, emitted from the emitting portion 74, is transcribed at an even amount to the flange 10 of the hub 8 by the adhesive emitting unit 62.

It is noted that, when the molten adhesive 13 is used in the adhesive reservoir 92 as described above, such that the amount of the molten adhesive 13 in the adhesive reservoir 92 is decreased, with the liquid level being lowered, the inert gas in the molten adhesive 13, heavier in specific gravity than oxygen, descends to follow the liquid surface of the molten adhesive 13 and is at all times above the liquid surface of the molten adhesive 13, thus preventing oxidation of the molten adhesive 13. The adhesive reservoir 92 is fed with the inert gas appropriately from the gas supply unit 96.

When coating the molten adhesive 13 on the flange 10 of the hub 8, the above-described adhesive coating unit 23 operates as follows: When the hub 8 is transferred from the transfer head mechanism 24 to the hub holding unit 61, the hub 8 is sucked to suction openings 69,70, and hence is held under suction by the hub holding member 66 of the hub holding unit 61, as shown in Fig.5. The hub 8, held by the hub holding unit 61, is coated with the molten adhesive 13 by the adhesive emitting unit 62. The adhesive emitting unit 62 is intermittently supplied with the molten adhesive 13 by the adhesive supplying mechanism 91, by the electro-magnetic valve 94 being opened/closed in a controller manner based on the control signal. This causes the molten adhesive 13 to be evenly furnished to the emitting portion 74 along the circumferential direction of the emitting portion 74. Since the upper ends of the inner peripheral tubular member 72 and the outer peripheral tubular member 73 are formed to an acute distal end, the emitting portion 74 holds a constant maximum amount of the molten adhesive 13 that can be retained by surface tension along the circumferential direction of the emitting portion 74, as shown in Fig. 11. Therefore, when an excess amount of the molten adhesive 13 larger than a specified amount is mistakenly emitted by the emitting portion 74, this excess molten adhesive 13 flows down along the inner peripheral inclined surface 78 of the inner peripheral tubular member 72 and along the outer peripheral inclined surface 81 of the outer peripheral tubular member 73. Consequently, this adhesive emitting unit 62 is able to reliably prevent an excess amount of the molten adhesive 13 larger than the specified amount from being transcribed to the hub 8.

Subsequently, as the transfer head mechanism 24 is uplifted, the hub holding member 66 is uplifted in the direction indicated by arrow F2 in Fig.5, with the rotating lifting member 67 being run in rotation, to separate the flange 10 of the hub 8 from the emitting portion 74. At this time, the air ejecting unit 85 ejects air from the ejection port 86 to sever the string of the molten adhesive 13. Next, the hub supporting portion 68 of the hub holding unit 61 halts its suction, whilst the transfer head mechanism 24 starts its suction, so that the hub 8 is held by the transfer head mechanism 24.

The transfer head mechanism 24, configured for transferring the hub 8, coated with the molten adhesive 13 by the adhesive coating unit 23, and for provisionally bonding the hub 8 to the main disc member 6, transfers the hub 8 from the hub supplying mechanism 36 to the adhesive coating unit 23, and also transfers the hub 8 coated with the molten adhesive 13 by the adhesive coating unit 23 to the main disc member 6 held by the disc holding unit 22 of the transporting unit 21, as shown in Fig.5. The transfer head mechanism 24 at the first position in Fig.1 performs the primary pressuring of the hub 8 for provisionally bonding the hub 8 to the main disc member 8.

This transfer head mechanism 24 includes a hub holding member 101 for holding the hub 8, as shown in Fig.5. This hub holding member 101 includes a hub holding unit 102 for holding the hub 8 and a shank portion 103 formed integrally with the hub holding unit 102. The hub holding member 101 has its shank portion 103 connected to a movable arm, not shown, for causing the movement of the hub holding member 101 between the hub supplying mechanism 36 and the adhesive coating unit 23 and between the adhesive coating unit 23 and the main disc member 6 held by the disc holding unit 22 of the transporting unit 21.

This hub holding unit 102 is of the same diameter as the diameter of the main body portion 9 of the hub 8. A mid portion of the hub holding unit 102 is provided with a first thrusting portion 104 adapted for thrusting the bottom 9a of the main body portion 9. The first thrusting portion 104 is formed as an annular protuberant portion, so that, when the hub 8 coated with the molten adhesive 13 is mounted on the rim of the center opening 7 of the main disc member 6, the first thrusting portion 104 will be able to thrust the rim of the spindle shaft engagement opening 11 formed in the bottom 9a of the main body portion 9 of the hub 8. The outer rim portion of the hub holding unit 102 operates as a second thrusting portion 105 which, when the hub 8 coated with the molten adhesive 13 is mounted on the center opening 7, thrusts the inner peripheral end of the flange 10 of the hub 8.

The hub holding unit 102 is provided on its surface holding the hub 8 with a suction opening 106 for sucking the hub 8. This suction opening 106 is connected to a suction pump, not shown, which is actuated only when transferring the hub 8 to suck the hub 8. From the lateral surface of the hub holding unit 102 is extended a flange which has its terminal end bent to form a disc thrusting portion 107 configured for thrusting the outer peripheral side of the main disc member 6. When the hub 8 coated with the molten adhesive 13 is mounted on the main disc member 6 held by the disc holding unit 22, the disc thrusting portion 107 thrusts the outer peripheral side of the main disc member 6 shown in Fig.4 against a disc supporting portion 46b constituting the disc holding unit 22. The disc thrusting portion 107 thrusts the main disc member 6 against the disc supporting portion 46b to correct the warping of the main disc member 6 to enable the hub 8 to be mounted with the main disc member 6 remaining in a planar state. The hub holding unit 102 is provided in its surface holding the hub 8 with an engagement recess 109 engaged by a positioning projection 68a of the adhesive coating unit 23 and by an engagement projection 47a of the disc holding unit 22 shown in Fig.4.

Around the shank portion 103 is placed a compression coil spring 108 adapted for biasing the hub holding member 101 downwards in Fig.5 with respect to the movable arm, not shown.

When transferring the hub 8 of the hub supplying mechanism 36 to the adhesive coating unit 23, the transfer head mechanism 24, described above, operates as follows: When the hub 8 is transferred between the hub supplying mechanism 36 and the hub holding unit 61, a suction pump, not shown, is actuated, in such a manner that the hub 8 of the hub supplying mechanism 36 is held under suction by the hub holding unit 102 through the suction openings 106, 106. The transfer head mechanism 24 then is moved upwards to an area above the adhesive coating unit 23 by a movement arm, not shown, as shown in Fig.5. The transfer head mechanism 24 then is moved by the movement arm, not shown, in a direction of approaching to the hub holding unit 61, as indicated by arrow F1 in Fig.5, to get the hub 8 held by the hub holding unit 61. The suction pump, not shown, is then halted so that the hub 8 is held by the hub holding unit 61.

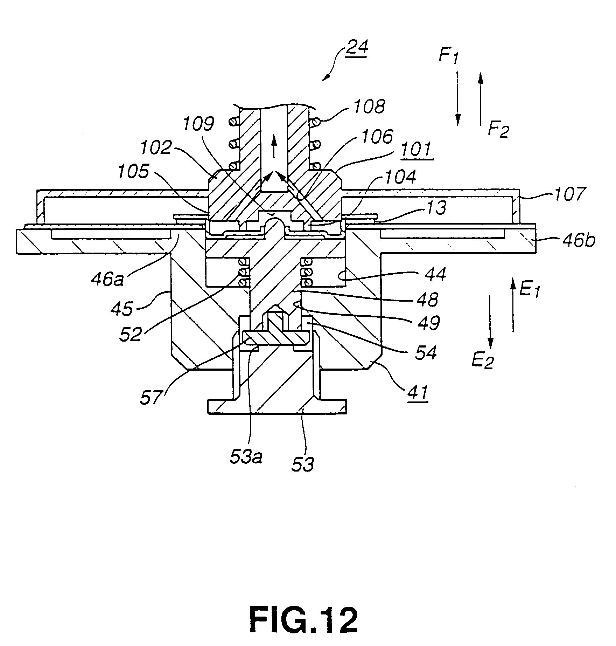

When the hub 8, the flange 10 of which is coated with the molten adhesive 13 by the adhesive coating unit 23, is transferred to the main, disc member 6 held by the disc holding unit 22 of the transporting unit 21, the transfer head mechanism 24 operates as follows: When the molten adhesive 13 is coated on the flange 10 of the hub 8 by the adhesive emitting unit 62, the transfer head mechanism 24 is moved in a direction away from the adhesive coating unit 23, by the movement arm, not shown, as indicated by arrow F2 in Fig.5, to the first position overlying the main disc member 6 held by the disc holding unit 22 on the transporting unit 21 shown in Fig. 12. When the transfer head mechanism 24 holds the hub 8 coated with the molten adhesive 13, the suction pump, not shown, is actuated to hold the hub 8 coated with the molten adhesive 13.

When in this first position overlying the main disc member 6, the transfer head mechanism 24 descends in a direction approaching to the main disc member 6, by the movement arm, not shown, as indicated by arrow F1 in Fig.12, to effect primary pressuring of the hub 8, as shown in Fig. 12. The main body portion 9 of the hub 8 is fitted into the center opening 7 of the main disc member 6, with the flange 10 abutting against the rim portion of the center opening 7. The first thrusting portion 104 of the hub holding unit 102 then thrusts the bottom 9a of the main body portion 9, with the second thrusting portion 105 on the outer rim of the hub holding unit 102 thrusting the inner rim of the flange 10. The positioning member 42 then is moved in the direction indicated by arrow E2 in Fig. 12 to thrust the flange 10 against the rim of the center opening 7 of the main disc member 6. Simultaneously, the disc thrusting portion 107 thrusts the main disc member 6 against the disc supporting portion 46b to correct the warping of the main disc member 6 to enable the hub 8 to be mounted in a flat state on the main disc member 6.

The hub holding unit 102 then thrusts the hub 8 against the main disc member 6, at a pressure of 1 to 3 kg/mm², for 0.5 to 2 seconds. This provisionally bonds the hub 8 to the rim of the center opening 7 of the main disc member 6. The transfer head mechanism 24 then is moved away from the main disc member 6. Meanwhile, when the transfer head mechanism 24 is moved away from the main disc member 6, the hub holding unit 102 halts the suction exerted on the hub 8.

The thrusting unit 25, configured for further thrusting the hub 8 provisionally bonded to the rim of the center opening 7 of the main disc member 6, is mounted on the disc holding unit 22, which is holding the main disc member 6, to which the hub 8 has been provisionally bonded on the downstream side of the transfer head mechanism 24, as shown in Fig.1. That is, the thrusting unit 25 effects secondary pressuring of the hub 8 at a second position downstream of the first position where there is provided the transfer head mechanism 24. The thrusting unit 25 also effects tertiary pressuring at a third position downstream of the second position. The thrusting unit 25 remains affixed to the disc holding unit 22 from the second position until the thrusting unit 25 is dismounted from the disc holding unit 22 at the fourth position in Fig.1.

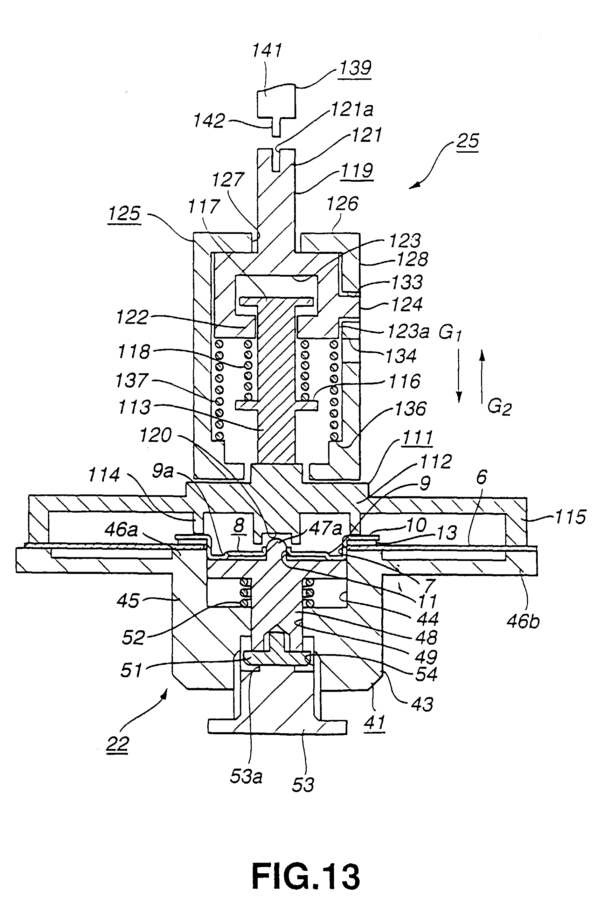

This thrusting unit 25 includes a hub thrusting member 111, adapted for thrusting the hub 8, as shown in Fig. 13. The hub thrusting member 111 includes a hub thrusting portion 112 for thrusting the hub 8 and a shank portion 113 provided on this hub thrusting portion 112. The surface of the hub thrusting portion 112 facing the hub 8 is provided with a thrusting portion 114 adapted for thrusting the flange 10 of the hub 8. This thrusting portion 114 is formed as a ring in order to thrust the flange 10 along its circumference. In the inner rim side of the thrusting portion 114 is formed an engagement recess 120 engaged by the engagement protrusion 47a when the hub 8 is thrust against the rim of the center opening 7 of the main disc member 6.

The hub thrusting portion 112 is formed integrally with a flange extending from its outer periphery and which is bent at its distal end to form a disc thrusting portion 115 adapted to thrust the outer rim side of the main disc member 6. When thrusting the hub 8 coated with the molten adhesive 13 against the main disc member 6 held by the disc holding unit 22, the disc thrusting portion 115 thrusts the outer rim side of the main disc member 6 against the disc supporting portion 46b of the disc holding unit 22. The disc thrusting portion 115 thrusts the main disc member 6 against the disc supporting portion 46b to correct warping of the main disc member 6 to enable the main disc member 6 to thrust the hub 8 in a flat state.

The shank portion 113, formed integrally with the hub thrusting portion 112, is provided at its mid and distal end portions with a flange-like retainer 116 and with a stop 117, respectively. The retainer 116 is engaged by a compression coil spring 118 as a biasing member for biasing the hub thrusting portion 112 towards the disc holding unit 22 as indicated by arrow G1 in Fig. 13. The stop 117 controls the amount of movement of the hub thrusting portion 112 in the direction indicated by arrow G1 and G2 in Fig.13.

The thrusting unit 25 includes an actuating member 119 for causing movement of the hub thrusting portion 112 in the direction indicated by arrow G1 and G2 in Fig.13. The actuating member 119 includes an actuator 121, rotated and thrust by a thrusting/rotating mechanism 139, not shown in detail, and a movement space area 123 in which there is provided a shank portion 113. There is provided a retainer 122 for retaining a stop 117 formed at the distal end of the shank portion 113 and which is adapted for sliding in the direction indicated by arrow G1 and G2 in Fig.13. The movement space area 123 prescribes the stroke of the stop 117 in the direction indicated by arrow G1 and G2 in Fig. 13, while restricting rotation of the hub thrusting member 111 with respect to the actuating member 119. The above-mentioned compression coil spring 118 is provided between the retainer 122 and the retainer 116 of the shank portion 113 to thrust the hub thrusting member 111 in the direction indicated by arrow G1 in Fig.13. The actuating member 119 is formed integrally with a retention projection 124 on a lateral wall section 123a thereof delimiting the movement space area 123. In the distal end of the actuator 121 is formed an engagement groove 121a engaged by an engagement portion 142 of a thrusting rotating mechanism 139 adapted for thrusting and rotating the actuating member 119.

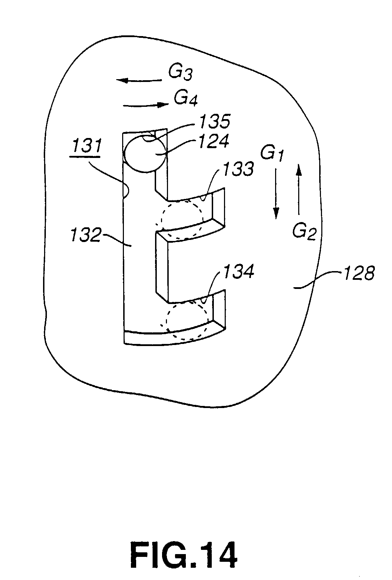

The thrusting unit 25 is provided with a cover 125 for covering the hub thrusting member 111. In the interior of the cover 125, there is movably mounted the actuating member 119 for movement in a direction towards and away from the disc holding unit 22 as indicated by arrow G1 and G2 in Fig.5. In a ceiling plate 126 of the cover 125 is bored an insertion opening 127 in which is inserted the actuator 121 of the actuating member 119. In a lateral wall section 128 of the cover 125 is formed a retention opening 131 in which is retained the retention projection 124 of the actuating member 119. Referring to Fig. 14, the retention opening 131 is made up of a guide portion 132, extending along the direction of movement of the actuating member 119, first and second retainers 133, 134, formed in a direction perpendicular to the guide portion 132, that is along the direction of rotation of the actuating member 119, and a non-retaining portion 135 formed in continuation to the guide portion 132 along the direction of extension thereof, and is of an inverted F shape in its entirety.

The first retainer 133 is provided above the guide portion 132, whilst the second retainer 134 is provided below the first retainer 133. The non-retaining portion 135 is formed in continuation to the guide 132 towards the first retainer 133 along the direction of extension of the guide 132. Also, when the retention projection 124 is retained by the non-retaining portion 135, the hub thrusting member 111 is not thrusting the main disc member 6, so that, after the end of the tertiary pressuring operation, the retention projection 124 is positioned at this non-retaining portion 135.

The inner peripheral surface of the cover 125 is formed integrally with a step 136, towards the hub thrusting portion 112, as shown in Fig.13. Between the actuating member 119 and the step 136, there is arranged a coil spring 137 as a biasing member for biasing the actuating member 119 in a direction away from the disc holding unit 22 as indicated by arrow G2 in Fig.13. Specifically, the force with which the hub thrusting member 111 thrusts the hub 8 in the direction indicated by arrow G1 in Fig. 13 is set so as to be larger, as a result of compression of the compression coil spring 118, adapted for biasing the hub thrusting member 111 in the direction indicated by arrow G1 in Fig. 13, as the engagement projection 124 of the actuating member 119 is retained from the first retainer 133 to the second retainer 134 of the retention opening 131.

Meanwhile, the thrusting rotating mechanism 139, configured for rotating the actuating member 119, is arranged at a second position of initiating the secondary pressuring of the hub 8, at a third position of cancelling the secondary pressuring and initiating the tertiary pressuring, and at a fourth position of cancelling the ternary pressuring, as shown in Fig.1. The thrusting rotating mechanism 139 includes an actuating arm 141 for rotationally thrusting the actuating member 119, as shown in Fig.13. The distal end of the thrusting rotating mechanism 139 is formed integrally with an engagement portion 142 engaged in an engagement groove 121a of the actuating portion 121 constituting the actuating member 119. The actuating arm 141 causes movement of the actuating member 119 in a direction towards and away from the disc holding unit 22, as indicated by arrow G1 and G2 in Fig. 13, as it is rotated, by a driving mechanism, not shown.

When the main disc member 6, to which the hub 8 has been mounted provisionally, is transferred to the second position in Fig.1, as shown in Fig.13, the thrusting unit 25 is arranged, at the second position in Fig.1, on the disc holding unit 22 holding the main disc member 6 carrying the provisionally mounted hub 8. In this initial state, the thrusting unit 25 is not thrusting the hub 8 against the main disc member 6, with the retention projection 124 engaging with the non-retaining portion 135.

When the secondary pressuring of the hub 8 is started, the thrusting rotating mechanism 139 is in operation. The actuating arm 141 is moved in the direction indicated by arrow G1 in Fig. 13 to cause movement of the retention projection 124 in the direction indicated by arrow G4 in Fig.14 to retain the retention projection 124, so far positioned at the non-retaining portion 135, in the first retainer 133. This contracts the coil spring 137 and therewith the compression coil spring 118. The thrusting portion 114, provided on the hub thrusting member 111 and biased by the compression coil spring 118 in the direction indicated by arrow G1 in Fig. 1, is abutted against the flange 10 of the hub 8, provisionally mounted on the main disc member 6, to thrust the flange 10. At this time, the thrusting portion 114 thrusts the hub 8 with a pressure larger than the pressure with which the hub holding unit 102 thrusts the hub. Specifically, the thrusting portion 114 thrusts the hub 8 at a pressure of 3 to 10 kg/mm² for 10 to 20 seconds. Meanwhile, the thrusting unit 25 is moved along with the disc holding unit 22 which holds the main disc member 6 carrying the hub 8 to shorten the secondary pressuring time.

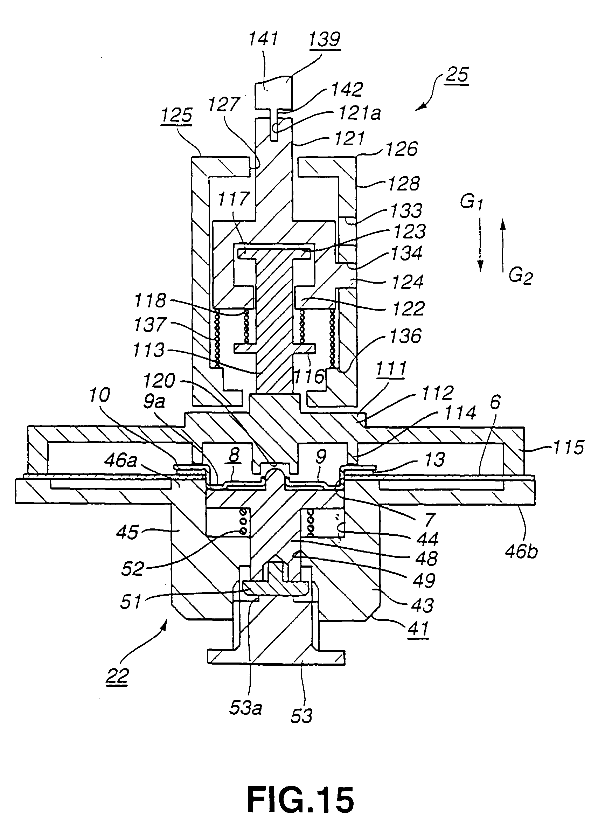

The thrusting unit 25, transferred with the disc holding unit 22, performs tertiary pressuring at the third position in Fig. 1. This tertiary pressuring is performed following the secondary pressuring, so that the thrusting unit 25 is performing the secondary pressuring. For performing the tertiary pressuring, the thrusting rotating mechanism 139 of the thrusting unit 25 is in operation. Specifically, the actuating arm 141 is run in rotation in the forward direction to cause the movement of the retention projection 124 in the direction indicated by arrow G3 in Fig.14. The actuating arm 141 then is run in rotation in reverse to cause the movement of the retention projection 124 along the guide 132 as indicated by arrow G4 in Fig.14. Thus, the retention projection 124 is retained by the second retainer 134 of the retention opening 131. This contracts the coil spring 137 and therewith the compression coil spring 118 to a more extent than in the secondary pressuring. The thrusting portion 114, provided in the hub thrusting member 111 and which is biased by the compression coil spring 118 in the direction indicated by arrow G1 in Fig.15, is abutted against the flange 10 of the secondary-pressured hub 8 of the main disc member 6 held on the disc holding unit 22, to thrust the flange 10. At this time, the thrusting portion 114 thrusts the hub 8 with a pressure larger than the pressure during the secondary pressuring. Specifically, the thrusting portion 114 thrusts the hub 8 at a pressure of 5 to 30 kg/mm² for 10 to 20 seconds. Meanwhile, the thrusting unit 25 is moved along with the disc holding unit 22 which holds the main disc member 6 carrying the hub 8 to shorten the secondary pressuring time. That is, the secondary pressuring occurs in succession to the third pressuring.

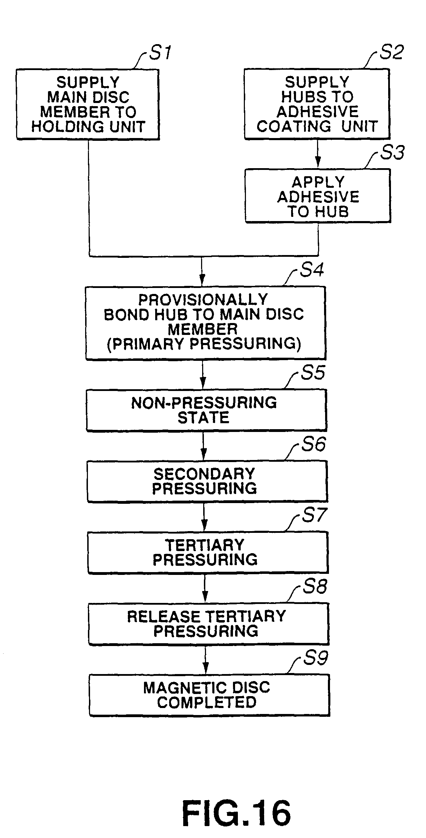

The manufacturing apparatus 20 for the magnetic disc, described above, manufactures the magnetic disc 5 with the hub 8 mounted on the rim of the center opening 7 of the main disc member 5. Referring to Fig.16, a disc supplying mechanism 32 transfers the main disc member 6 by a conveyor 33 in the direction indicated by arrow C in Fig.1 to sequentially transfer the main disc member 6 to the transporting unit 21. Specifically, the main disc member 6 is freed of static charges by ionic air being sprayed thereon by a static charge removing unit 34 constituting the disc supplying mechanism 32. The main disc member 6 then is transferred by the transfer unit 35 to the disc holding unit 22 arranged on the transporting unit 21. The disc holding unit 22 supports the outer periphery of the signal recording area of the main disc member 6 by the disc supporting portion 46b, while supporting the inner periphery of the signal recording area of the main disc member 6 by the disc supporting portion 46a. Moreover, since the positioning member 42 is biased by the compression coil spring 52 in the direction indicated by arrow E1 in Fig.4, the fitting portion 47 is fitted in the center opening 7 of the main disc member 6 for positioning the main disc member 6.

Simultaneously, the hub 8 is transferred, at step S2 in Fig.16, by the hub supplying mechanism 36 to the adhesive coating unit 23. That is, the transfer head mechanism 24 transfers the hub 8, dwelling in a stand-by state at the trailing end of the transporting unit 38 of the hub supplying mechanism 36, to the adhesive coating unit 23, with the flange 10 directing upwards, as shown in Fig.1. Specifically, a suction pump, not shown, is in operation, whereby the hub 8 of the hub supplying mechanism 36 is held by suction through the suction openings 106, 106 by the hub holding unit 102. Thereafter, the transfer head mechanism 24 is moved to a position overlying the adhesive coating unit 23 by a movement arm, not shown. The transfer head mechanism 24 then is moved by a movement arm, not shown, in a direction approaching to the hub holding unit 61, as indicated by arrow F1 in Fig.5, to hold the hub 8 by the hub holding unit 61.

At step S3 in Fig. 16, the hub holding unit 102 of the transfer head mechanism 24 sets the hub 8 held thereby on the adhesive coating unit 23. Specifically, the transfer head mechanism 24 is moved in a direction of approaching to the hub holding unit 61, as indicated by arrow F1 in Fig.5, by a movement arm, not shown, in order to set the hub 8 on the adhesive coating unit 23. When the hub 8 held by the transfer head mechanism 24 is delivered to the adhesive coating unit 23, the suction pump of the transfer head mechanism 24, not shown, is halted, at the same time as the suction pump provided on the hub holding unit 61 is in operation, so that the hub 8 is sucked by the suction openings 69, 70 and held under suction by the hub holding member 66 of the hub holding unit 61.

The hub 8 held by the hub holding unit 61 is coated with the molten adhesive 13 by the adhesive emitting unit 62, as shown in Fig.5. The adhesive emitting unit 62 is fed with the molten adhesive 13 by the adhesive supplying mechanism 91. When coating the molten adhesive 13 on the flange 10 of each hub 8, the electro-magnetic valve 94 is opened/closed, under control by the controller 94, by a sequence of pulse signals, each having a period of 0.5 msec and a pulse width of 0.3 msec, thrice on end, in an intermittent manner, with the pause period of 0.1 sec, as shown in Fig.9. This causes the molten adhesive 13 to be emitted at a specified pressure to the emitting portion 74, so that the latter is fed with the specified amount of the molten adhesive 13. This molten adhesive 13 is transcribed at a uniform quantity to the flange 10 of the hub 8. The upper ends of the inner peripheral tubular member 72 and the outer peripheral tubular member 73 are acute in profile, so that, if an amount of the molten adhesive 13 in excess of a specified amount is mistakenly emitted to the emitting portion 74, any excess portion of the molten adhesive 13 flows down the inner peripheral inclined surface 72 and the outer peripheral inclined surface 81. Thus, with this adhesive emitting unit 62, it is possible to reliably prevent an excessive quantity of the molten adhesive 13 from being transcribed to the hub 8.

At step S4, the transfer head mechanism 24 transfers the hub 8, the flange 10 of which has been coated with the molten adhesive 13, from the adhesive coating unit 23 to the disc holding unit 22 holding the main disc member 6, to attach the hub 8 in the center opening 7 of the main disc member 6 held by the disc holding unit 22. Specifically, as the transfer head mechanism 24 is uplifted, the hub holding member 66 is uplifted in the direction indicated by arrow F2 in Fig.5, with the rotating lifting member 67 being run in rotation, to separate the flange 10 of the hub 8 from the emitting portion 74. At this time, the air ejecting unit 85 ejects air from the ejection port 86 to sever the string-like molten adhesive 13. The hub supporting portion 68 of the hub holding unit 61 halts suction, whilst the transfer head mechanism 24 starts its suction, so that the hub 8 is held under suction by the transfer head mechanism 24.

At a position above the main disc member 6, the transfer head mechanism 24 is lowered in the direction approaching to the main disc member 6 as indicated by arrow F1 in Fig.12, by a movement arm, not shown, for mounting the hub 8 on the main disc member 6 held by the disc holding unit 22, at a position above the main disc member 6. The main body portion 9 of the hub 8 is fitted in the center opening 7 of the main disc member 6, with the flange 10 compressing against the periphery of the center opening 7 to effect primary pressuring. The first thrusting portion 104 of the hub holding unit 102 pressures the bottom surface 9a of the main body portion 9, while the second thrusting portion 105 of the outer periphery of the hub holding unit 102 thrusts the inner periphery of the flange 10. The positioning member 42 then is moved in the direction indicated by arrow E2 in Fig.12 to cause the flange 10 to thrust the rim of the center opening 7 of the main disc member 6. Simultaneously, the disc thrusting portion 107 thrusts the main disc member 6 against the disc supporting portion 46b to correct the warping of the main disc member 6 to enable the hub 8 to be mounted as the main disc member 6 is kept in its planar state.

At this time, the hub holding unit 102 thrusts the hub 8 against the main disc member 6 at a pressure of 1 to 3 kg for 0.5 to 2 seconds. This provisionally mounts the hub 8 on the rim of the center opening 7 of the main disc member 6. The transporting unit 21 is then at a standstill. In this state, the hub 8 is provisionally mounted on the rim of the center opening 7 of the main disc member 6. Thereafter, the transfer head mechanism 24 is moved away from the main disc member 6. Meanwhile, when the transfer head mechanism 24 is moved away from the main disc member 6, the hub holding unit 102 halts the suction for the hub 8.

After the hub 8 is provisionally mounted on the main disc member 6, the transporting unit 21 again is run in the direction indicated by arrow B in Fig. 1 so that the main disc member 6 is transported in the direction indicated by arrow B in Fig. 1 for about 30 seconds in a state in which the hub 8 is not thrust against the main disc member 6.

When the main disc member 6, on which the hub 8 held on the disc holding unit 22 has been mounted provisionally, is transported to the second position, a thrusting unit 25 for applying secondary and tertiary pressuring to the hub 8 is mounted at step S6 in Fig.16 on the disc holding unit 22. Specifically, when the main disc member 6, on which has been provisionally mounted the hub 8 held by the disc holding unit 22, is transported to the second position shown in Fig. 1, the thrusting unit 25 is arranged at the second position in Fig. 1 on the disc holding unit 22 which holds the main disc member 6, on which has been provisionally mounted the hub 8, at the second position shown in Fig.1. In this initial state, the thrusting unit 25 has the retention projection 124 retained by the non-retaining portion 135, with the hub 8 not being thrust against the main disc member 6, as shown in Figs.13 and 14. When the secondary pressuring of the hub 8 is started, the thrusting rotating mechanism 139 is in operation to cause movement of the actuating arm 141 in the direction indicated by arrow G1 in Fig.13 to cause movement of the retention projection 124 along the guide 132. The actuating arm 141 then is moved in the direction indicated by arrow G4 in Fig.14 to retain the retention projection 124 positioned at the non-retaining portion 135 by the first retainer 133. This compresses the coil spring 137 and therewith the compression coil spring 138. The thrusting portion 114, provided on the hub thrusting member 111 and which has been biased by the compression coil spring 118 in the direction indicated by arrow G1 in Fig.13, is abutted against the flange 10 of the hub 8 provisionally mounted on the main disc member 6 held on the disc holding unit 22 to thrust the flange 10 to effect the secondary pressuring. At this time, the thrusting portion 114 thrusts the hub 8 with a pressure larger than the pressure with which the hub holding unit 102 of the transfer head mechanism 24 thrust the hub 8. Specifically, the thrusting portion 114 thrusts the hub 8 at a pressure of 3 to 10 kg/mm² for 10 to 20 seconds. Meanwhile, the thrusting unit 25 is moved by the transporting unit 21 along with the disc holding unit 22 which holds the main disc member 6 carrying the hub 8 to shorten the secondary pressuring time.

When the main disc member 6, on which has been provisionally mounted the hub 8 held by the disc holding unit 22 in the secondarily pressured state, is transported to the third position, the hub 8 in the secondarily pressured state is subjected at step S7 in Fig.16 to tertiary pressuring in succession to the secondary pressuring. Specifically, the thrusting rotating mechanism 139 of the thrusting unit 25 is driven to effect tertiary pressuring, as shown in Figs.14 and 15, with the actuating arm 141 being run in rotation in the forward direction to cause movement of the retention projection 124 in the direction indicated by arrow G3 in Fig.14. The actuating arm 141 then is moved in the direction indicated by arrow G1 in Fig.13 to cause movement of the retention projection 124 along the guide 132 as indicated by arrow G1 in Fig.14. The actuating arm 141 then is rotated in reverse to cause movement of the retention projection 124 in the direction indicated by arrow G4 in Fig.14. This retains the retention projection 124 by the second retainer 134 of the retention opening 131 to compress the coil spring 137 further to a more extent than during the secondary pressuring and therewith the compression coil spring 118. The thrusting portion 114, provided on the hub thrusting member 111 and biased by the compression coil spring 118 in the direction indicated by arrow G1 in Fig.15, is abutted against the flange 10 of the hub 8, secondarily pressured against the main disc member 6 held on the disc holding unit 22, to thrust the flange 10 to effect the tertiary pressuring. Specifically, the thrusting portion 114 thrusts the hub 8 at a pressure of 5 to 30 kg/mm² for a few seconds. Meanwhile, the thrusting unit 25 is moved along with the disc holding unit 22 which holds the main disc member 6 carrying the hub 8 to shorten the secondary pressuring time.

If, after the tertiary pressuring, the main disc member 6 is transported to the fourth position in Fig.1, the state of the tertiary pressuring is released at step S8 in Fig.16, by the thrusting rotating mechanism 139, arranged at the fourth position. That is, when the ternary pressurized main disc member 6 has been transported to this fourth position, the thrusting rotating mechanism 139 is rotated and moved in a direction away from the disc holding unit 22. This causes the retention projection 124 of the thrusting unit to be retained by the non-retaining portion 135 of the retention opening 131 to release the state of thrusting of the hub 8 against the main disc member 6. This dismounts the thrusting unit 25 from the disc holding unit 22.

When the main disc member 6, on which the hub 8 has been bonded completely, is transported by the transporting unit 21 in the direction indicated by arrow B in Fig. 1, the main disc member 6, carrying the hub 8 thereon, is ejected from the disc holding unit 22 at the ejecting position shown in Fig. 1 to permit ejection of the magnetic disc 5 comprising the main disc member 6 and the hub 8 completely bonded thereto.

With the above-described manufacturing apparatus 20 for the magnetic disc 5, described above, the molten adhesive 13 is allowed to solidify completely during one cycle since entrance of the main disc member 6 into the transporting unit 21 until ejection by the transporting unit 21 of the magnetic disc 5 comprising the main disc member 6 and the hub 8 bonded thereto, thereby preventing the hub 8 from being shifted with respect to the main disc member 6. In particular, with the manufacturing apparatus 20 for the magnetic disc 5, in which the secondary pressuring and the tertiary pressuring are effected after provisionally mounting the hub 8 to the rim of the center opening 7 of the main disc member 6 and primarily pressuring the hub 8 by the transfer head mechanism 24, as shown in Figs.12, 13 and 15, it is possible to prevent deviation or distortion in the bonding portion between the hub 8 and the main disc member 6. Moreover, when the hub 8 is thrust by the transfer head mechanism 24 and the thrusting unit 25 against the rim of the center opening 7 of the main disc member 6, any warping of the main disc member 6 is removed, whereby the outer rim of the signal recording area of the main disc member 6 is thrust against the disc supporting portion 46b of the disc holding unit 22 by the disc thrusting portion 107 of the transfer head mechanism 24 and by the disc thrusting portion 115 of the thrusting unit 25 to prevent the distortion of the hub 8 when mounting the hub 8 on the rim of the center opening 7 of the main disc member 6. The magnetic disc 5, manufactured as described above, is free of offsetting or distortion of the hub 8, thus diminishing deviation from true planarity of the disc surface to enable recording and/or reproducing of information signals reliably.

Moreover, since the controller 97 of the adhesive supplying mechanism 91 causes the electro-magnetic valve 94 to be opened and closed in a controlled manner by pulse signals of small pulse intervals in coating the flange 10 of the hub 8 with the molten adhesive 13, the latter can be emitted to the emitting portion 74 at a specified pressure. Consequently, a minor amount of the molten adhesive 13 is intermittently supplied to the emitting portion 74 until a specified amount of the molten adhesive 13 sufficient to be transcribed to the flange of the hub is reached. Thus, the magnetic disc 5, comprising the main disc member 6 and the hub 8 reliably mounted on the rim of the center opening 7 thereof, is run in rotation, without suffering from offsetting from planarity, when the disc cartridge 1 is loaded on the recording and/or reproducing apparatus and run in this state in rotation, thereby assuring reliable recording and/or reproduction of information signals.

Moreover, in the present manufacturing apparatus 20, in which an inert gas for preventing oxidation of the molten adhesive 13 is charged into the space of the adhesive reservoir 92 not containing the molten adhesive 13, it is possible to prevent oxidation of the molten adhesive 13 in the adhesive reservoir 92. Therefore, since there is no necessity of employing the oxidized molten adhesive 13 when mounting the hub 8 on the main disc member 6, it is possible to improve bonding strength of the hub 8 to the main disc member 6.

## Claims

1. An adhesive coating apparatus, comprising:
a hub holding mechanism for holding a hub including a bottomed, substantially tubular, main body portion fittable in a center opening in a center portion of a disc-shaped body portion of a recording medium, and a flange extending from an open end of said main body portion for bonding to a rim of said center opening of said disc-shaped body portion of said recording medium;
an adhesive emitting mechanism including an emitting portion for emitting molten adhesive to be applied to said flange of said hub held by said hub holding mechanism, said adhesive emitting mechanism transferring molten adhesive emitted by said emitting portion to a surface of said flange of said hub facing said disc-shaped body portion of said recording medium; and
an adhesive supplying mechanism for supplying adhesive to said emitting portion, said adhesive supplying mechanism including an adhesive reservoir for storing molten adhesive and a control valve for controlling the supply of molten adhesive to said emitting portion from said adhesive reservoir;
said control valve being intermittently opened/closed in a controlled manner by pulse signals to supply said molten adhesive.

2. The adhesive coating device according to claim 1, wherein said control valve is opened/closed in a controlled manner by pulse signals with a pulse width of 0.01 to 0.5 ms.

3. The adhesive coating device according to claim 1, wherein said adhesive reservoir is fed with an inert gas for preventing oxidation of molten adhesive stored therein.

4. The adhesive coating device according to claim 3, wherein said inert gas is heavier in specific gravity than oxygen.
